# EUROPEAN PATENT APPLICATION

(11) **EP 2 052 803 A1**
(43) Date of publication of application: **29.04.2009**
(21) Application number: 07020817.8
(22) Date of filing: 24.10.2007
(51) Int. Cl.: B23K 11/31

(54) **Pressure application driving unit of welding gun**

(71) Applicant: Obara Corporation, Ayase-shi Kanagawa-ken 252-1104 (JP)
(72) Inventor: Sato, Yoshio, Ayase-shi Kanagawa-ken 252-1104 (JP)
(74) Representative: Goddar, Heinz J.

(57) **Abstract**

The invention provides a pressure application driving unit of a welding gun that is safe, low in manufacturing cost, and compact as a whole by employing a hollow rotary shaft (5) of the ordinary motor as it is and fixing a screw shaft fixing member (13) to an end face of the rotary shaft (5), thereby reciprocating a pressure application shaft (8) by the rotation of a screw shaft (17). The pressure application driving unit of a welding gun comprises a hollow through hole (6) formed in the rotary shaft (5) of a motor (1), the pressure application shaft (8) having a portion pulled in the hollow through hole (6) of the motor via the screw shaft (17) to be driven by the motor (1), a hole (9) for housing a tip end side of the screw shaft (17) formed on the center portion of the pressure application shaft (8) in the axial direction of the pressure application shaft (8), a nut (10) at the end side of the pressure application shaft and a screw (19) of the screw shaft (17) are threaded with each other, the pressure application shaft side (8) being nonrotatable, a space (22) formed in the hollow through hole (6) and capable of housing the nut (10) to be threaded with the screw shaft (17), wherein a screw shaft fixing member (13) is fixed to tap holes (7) formed on an end face of the rotary shaft (5) of the motor (1) and the screw shaft (17) is fixed in the screw shaft fixing member (13).

## Description

### FIELD OF THE INVENTION

The invention relates to a pressure application driving unit of a welding gun comprising a hollow through hole formed in a rotary shaft of a motor, a pressure application shaft having a portion pulled in the hollow through hole of the motor via a screw shaft to be driven by the motor, a hole for housing a tip end side of the screw shaft formed on the center portion of the pressure application shaft in the axial direction of the pressure application shaft, a nut at the end side of the pressure application shaft and a screw of the screw shaft are threaded with each other, the pressure application shaft side being nonrotatable, a space formed in the hollow through hole and capable of housing the nut to be threaded with the screw shaft.

There has been conventionally known a pressure application driving unit of a welding gun comprising a hollow through hole formed in a rotary shaft of a motor, a pressure application shaft having a portion pulled in the hollow through hole of the motor via a screw shaft to be driven by the motor, a hole for housing a tip end side of the screw shaft formed on the center portion of the pressure application shaft in the axial direction of the pressure application shaft, a nut disposed at the end side of the pressure application shaft, the pressure application shaft side being nonrotatable, a space formed in the hollow through hole and capable of housing the nut to be threaded with the screw shaft (for example, as disclosed in Patent Document 1).

Further, there has been also conventionally known a pressure application driving unit of a C-type welding gun comprising a hollow through hole formed in a rotary shaft of a motor, a pressure application shaft driven by the motor and having a portion pulled in the hollow through hole of the motor, wherein a nut is fixed to tap holes formed on the end face of the rotary shaft, and a screw shaft provided with a screw to thread with the nut serves as a pressure application shaft which is nonrotatable and having a portion to be pulled in the hollow through hole (for example, as disclosed in Patent Document 2).
Patent Document 1: JP 2001-293577 A1
Patent Document 1: JP 2000-94143 A1

However, in the case of the foregoing first conventional pressure application driving unit of the welding gun, the pressure application shaft in which the nut is disposed is also provided inside the hollow rotary shaft of the motor, the driving unit can be shortened but it is necessary for the hollow rotary shaft to have a portion for fixing the screw thereto and a space for housing the nut therein. Accordingly, the hollow rotary shaft of the ordinary motor can not be used as it is, and it is necessary for the rotary shaft to be subjected to special machining, which is not implemented with ease.

Further, in the case of the foregoing second conventional pressure application driving unit of the welding gun, the pressure application shaft forms the screw shaft, there is a likelihood that welding sputter adheres to the screw shaft when applying the pressure, causing a problem that a protection means of the screw shaft is required and a rotation stop mechanism of the screw shaft is not easy.

### SUMMARY OF THE INVENTION

The invention has been developed in view of the problems of the conventional pressure application driving units, and it is an object of the invention to provide a pressure application driving unit of a welding gun that is safe, low in manufacturing cost, and compact as a whole by employing a hollow rotary shaft of the ordinary motor as it is and reciprocating a pressure application shaft by the rotation of a screw shaft by fixing a screw shaft fixing member to an end face of the rotary shaft.

To achieve the above object, the first aspect of the invention provides a pressure application driving unit of a welding gun comprising a hollow through hole formed in a rotary shaft of a motor, a pressure application shaft having a portion pulled in the hollow through hole of the motor via a screw shaft to be driven by the motor, a hole for housing a tip end side of the screw shaft formed on the center portion of the pressure application shaft in the axial direction of the pressure application shaft, a nut at the end side of the pressure application shaft and a screw of the screw shaft are threaded with each other, the pressure application shaft side being nonrotatable, a space formed in the hollow through hole and capable of housing the nut to be threaded with the screw shaft, characterized in that a screw shaft fixing member is fixed to tap holes formed on an end face of the rotary shaft of the motor and the screw shaft is fixed in the screw shaft fixing member.

Further, the second aspect of the invention is to provide a pressure application driving unit of a welding gun characterized in that the screw shaft fixing member is preliminarily integrated with the screw shaft and fixed to a rear portion of the rotary shaft of the motor.

With the configuration of the pressure application driving unit of a welding gun of the first aspect of the invention, the pressure application driving unit can be shortened, and the screw shaft can be fixed inside the hollow through hole of the rotary shaft by use of the screw shaft fixing member while the motor for rotating the nut and the motor for rotating the screw shaft can be commonly used, thereby providing the pressure application driving unit of the welding gun that is safe, low in manufacturing cost, and compact as a whole.

With the configuration of the pressure application driving unit of the welding gun of the second aspect of the invention, in addition to the effect of the first aspect of the invention, alignment between the screw shaft and screw shaft fixing member can be preliminarily implemented with ease, and the integrated screw shaft and screw shaft fixing member is fixed to the rear portion of the rotary shaft, so that the screw shaft can be precisely positioned relative to the rotary shaft and the assembly of these components can be implemented with ease.

### BRIEF DESCRIPTION OF THE DRAWINGS

Fig. 1 is a longitudinal sectional view of a main portion of a pressure application driving unit according to an embodiment of the invention;
Fig. 2 is a longitudinal sectional view of a main portion of a pressure application driving unit according to another embodiment of the invention; and
Fig. 3 is a longitudinal sectional view showing an example of an assembly of the components of the pressure application driving unit of the invention.

### PREFERRED EMBODIMENT OF THE INVENTION

### First Embodiment:

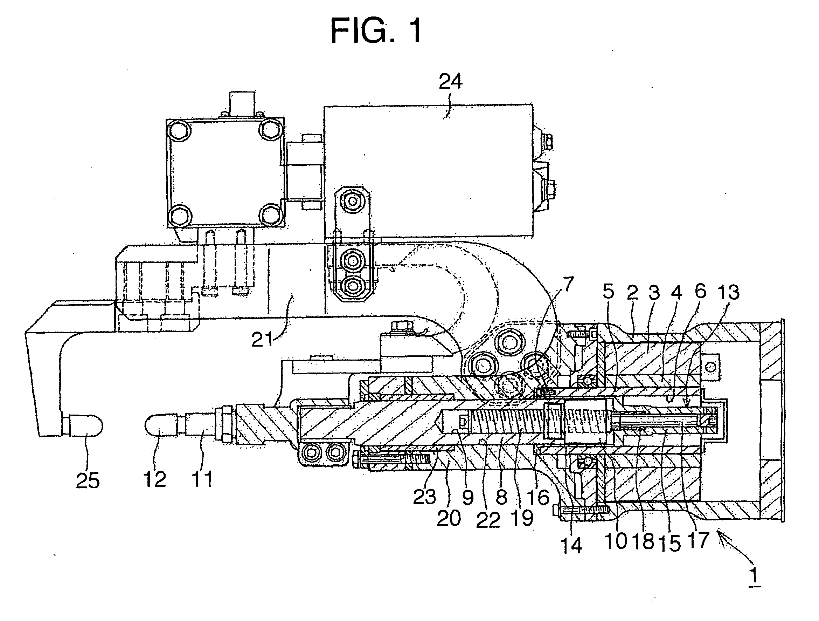

Described now with reference to Fig. 1 is the first embodiment of the invention.

In Fig. 1, depicted by 1 is a servomotor which comprises a stator winding 3 fixed to an outer shell 2 of the servomotor 1, a rotor magnetic pole 4 disposed at an inner periphery of the stator winding 3 and a rotary shaft 5 to which the rotor magnetic pole 4 is fixed, and a hollow through hole 6 is formed in the rotary shaft 5. A plurality of tap holes are formed on the front end face of the rotary shaft 5.

Depicted by 8 is a pressure application shaft and it has a hole 9 at the center portion thereof in the axial direction thereof in which the tip end side of a screw shaft, described later, is housed, a nut 10 fixed to and arranged at the rear end side thereof which is disposed integrally with the pressure application shaft 8 which is nonrotable, and an electrode 12 attached to the tip end side thereof via a tip holder 11. The nut 10 may be formed by integration molding at the rear end side of the pressure application shaft 8.

Depicted by 13 is a screw shaft fixing member which is formed of a hollow tubular body and comprises a large diameter portion 14 capable of housing the nut 10 therein and a small diameter portion for fixing a screw shaft, described later, thereto. A flange 16 having holes which align with the tap holes 7 formed on the end face of the rotary shaft 5 is formed on the end portion of the large diameter portion 14. The screw shaft fixing member 13 is fixed and positioned inside the hollow through hole 6.

Depicted by 17 is a screw shaft which is fixed inside the small diameter portion 15 of the screw shaft fixing member 13 by a fixing means 18 formed of a wedge, and a screw 19 threadably provided on the screw shaft 17 is threaded with the nut 10.

Depicted by 20 is a gun bracket which is fixed to the front face of the servomotor 1, and a fixed arm 21 is fixed to the gun bracket 20 while a hole 22 is formed in the gun bracket 20 at the center portion in the axial direction through which the pressure application shaft 8 is inserted, and a linear motion bearing 23 is fixed to the tip end side of the hole 22. Depicted by 24 is a transformer for welding placed on the fixed arm 21.

With the configuration of the welding gun, when the servomotor 1 is driven from the state shown in Fig. 1, the screw shaft 17 is rotated via the screw shaft fixing member 13 fixed inside the hollow through hole 6 by the rotation of the rotary shaft 5 of the servomotor 1. With the rotation of the screw shaft 17, the nut 10 threaded with the screw 19 moves forward together with the pressure application shaft 8 along the screw shaft 17. When the pressure application shaft 8 moves forward, the electrode 12 approaches another electrode 25 so that a welding operation is implemented in a state where a workpiece (not shown) is clamped between both the electrodes 12, 25.

With the configuration of the pressure application driving unit of the welding gun, when the screw shaft fixing member 13 is fixed to the tap holes formed on the end face of the rotary shaft 5 with ease by use of the screw shaft fixing member 13, the motor for rotating the nut for fixing a nut to the end face of the conventional rotary shaft can be applied to the motor for rotating the screw of the present invention without subjecting the motor to special machining so that the driving unit can be shortened, and further since the screw shaft fixing member 13 is attached to the end face of the rotary shaft, the attachment accuracy can be sufficiently expected, thereby providing the pressure application driving unit of the welding gun which is low in manufacturing cost of the driving unit, and safe and compact as a whole.

### Second Embodiment:

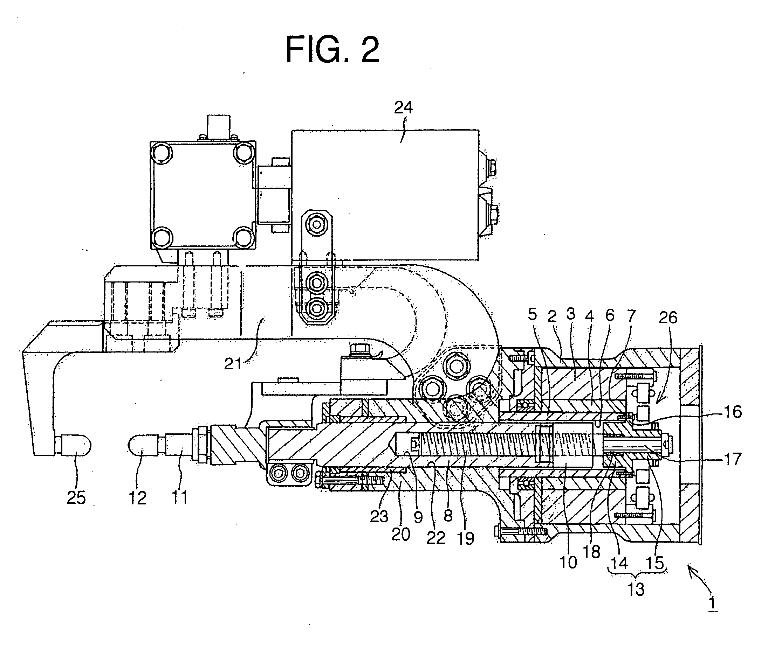

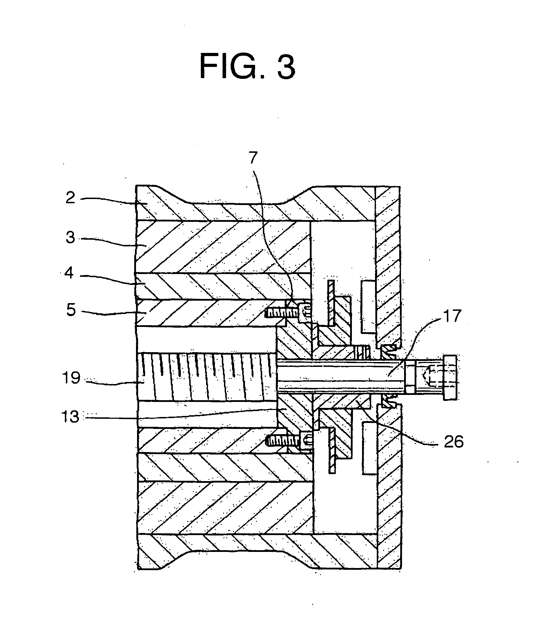

Described now with reference to Figs. 2 and 3 is the second embodiment of the invention.

According to the second embodiment, the screw shaft fixing member 13 of the first embodiment is fixed to a plurality of tap holes formed on the rear end face of a rotary shaft 5. Components of the second embodiments are substantially the same as those of the first embodiment except the configuration mentioned immediately above, and hence the explanation thereof is omitted.

A member attached to a later half of a screw shaft fixing member 13 and depicted by 26 is a position detection member.

Even in the second embodiment, it is possible to expect substantially the same effect as the first embodiment.

Further, as shown in Fig. 3, in the case where the screw shaft fixing member 13 and a screw shaft 17 are preliminarily integrated with each other by welding or retainment by rotation stop, and so force, and the integrated screw shaft fixing member 13 and screw shaft 17 is fixed to the rear portion of the rotary shaft 5, the screw shaft 17 and screw shaft fixing member 13 are aligned preliminarily with each other with ease, the accuracy positioning of the screw shaft 17 relative to the rotary shaft 5 can be implemented with ease, so that the assembly of these components can be implemented with ease.

Although the invention has been described with reference to the drawing of the C-type welding gun according to the first and second embodiment of the invention, the invention is not limited to the C-type welding gun but can be applied to a pressure application driving unit of an X-type welding gun.

## Claims

1. A pressure application driving unit of a welding gun comprising
a hollow through hole (6) formed in a rotary shaft (5) of a motor (1);
a pressure application shaft (8) having a portion pulled in the hollow through hole (6) of the motor via a screw shaft (17) to be driven by the motor (1);
a hole (9) for housing a tip end side of the screw shaft (17) formed on the center portion of the pressure application shaft (8) in the axial direction of the pressure application shaft (8);
a nut (10) at the end side of the pressure application shaft and a screw (19) of the screw shaft (17) are threaded with each other, the pressure application shaft side (8) being nonrotatable; and
a space (22) formed in the hollow through hole (6) and capable of housing the nut (10) that is threaded with the screw shaft (17);
wherein a screw shaft fixing member (13) is fixed to tap holes (7) formed on an end face of the rotary shaft (5) of the motor (1) and the screw shaft (17) is fixed in the screw shaft fixing member (13).

2. The pressure application driving unit according to Claim 1, wherein the screw shaft fixing member (13) is preliminarily integrated with the screw shaft (17) and fixed to a rear portion of the rotary shaft (5) of the motor (1).
